(19) Europäisches Patentamt / European Patent Office / Office européen des brevets

(11) **EP 3 301 364 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(51) Int Cl.:
*F23D 14/60* *(2006.01)*    *F23N 1/02* *(2006.01)*
*F23N 5/18* *(2006.01)*

(21) Anmeldenummer: **17174747.0**

(22) Anmeldetag: **07.06.2017**

(54) **VERBRENNUNGSEINRICHTUNG MIT BRENNER UND EINER VORRICHTUNG ZUR DURCHFLUSSMESSUNG VON TURBULENTEN STRÖMUNGEN**

COMBUSTION UNIT WITH A BURNER AND FLOW MEASUREMENT OF TURBULENT FLOWS

UNITÉ DE COMBUSTION AVEC UN BRULEUR ET UN DISPOSITIF DE MÉSURE DE DÉBIT D'ÉCOULEMENTS TURBULENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2016 EP 16191977**

(43) Veröffentlichungstag der Anmeldung:
**04.04.2018 Patentblatt 2018/14**

(73) Patentinhaber: **Siemens Aktiengesellschaft 80333 München (DE)**

(72) Erfinder:
• **Lochschmied, Rainer**
  **76287 Rheinstetten-Forchheim (DE)**
• **Schmanau, Mike**
  **76316 Malsch (DE)**
• **Schmiederer, Bernd**
  **76149 Karlsruhe (DE)**

(74) Vertreter: **Maier, Daniel Oliver**
**Siemens AG**
**Postfach 22 16 34**
**80506 München (DE)**

(56) Entgegenhaltungen:
**DE-A1-102010 010 952    FR-A1- 2 723 630**
**GB-A- 1 571 906**

EP 3 301 364 B1

**Beschreibung**

Die vorliegende Offenbarung befasst sich mit der Messung von Strömungen eines Fluids in einer Verbrennungseinrichtung. Insbesondere befasst sich die vorliegende Offenbarung mit der Messung von Strömungen von Fluiden wie Luft in Gegenwart von Turbulenz.

Durch Änderungen von Lufttemperatur und Luftdruck treten abhängig von Lufttemperatur und Luftdruck Schwankungen der Luftzahl λ auf. Verbrennungseinrichtungen werden deshalb mit einem Luftüberschuss eingestellt. Diese Massnahme dient der Vermeidung unhygienischer Verbrennung. Nachteilig an der Einstellung von Verbrennungseinrichtungen auf einen Luftüberschuss ist ein niedrigerer Wirkungsgrad der Anlage.

Weiterhin kommen Drehzahlgeber und Luftdruck-Schalter zur Messung der Luftmenge in Betracht. Nachteilig an Drehzahlgebern ist, dass sie nicht sensitiv sind gegenüber Schwankungen von Lufttemperatur und Luftdruck. Nachteilig an Luftdruck-Schaltern ist, dass eine Luftdrucküberwachung dadurch nur bei einem bestimmten Druck gelingt. Immerhin lässt sich durch den Einsatz mehrerer Schalter Luftdruck bei mehreren Drücken überwachen. Dennoch ist bisher eine Nachjustierung im gesamten Betriebsbereich der Verbrennungseinrichtung kaum möglich. Eine Lösung zur Justage erfordert ferner bisher zwei Einheiten.

Das Auftreten von Turbulenz erschwert das Problem zusätzlich, weil das Signal eines Strömungssensors stark von dessen Einbauposition inmitten einer turbulenten Strömung beeinflusst wird. Ausserdem ist das Messsignal bedingt durch die Turbulenz stark verrauscht.

Das deutsche Patent DE4337703C1 ist angemeldet am 5. November 1993. Die Erteilung ist veröffentlicht am 23. März 1995. DE4337703C1 behandelt ein Mehrfachstellgerät mit eingangsseitigem Regler. Die deutsche Patentanmeldung DE3703934A1 wurde angemeldet am 9. Februar 1987 und veröffentlicht am 13. August 1987. Es wird eine Priorität vom 11. Februar 1986 in Anspruch genommen. DE3703934A1 lehrt eine Einrichtung zur Steuerung der Brennstoff- und / oder Luftzufuhr zum Brenner einer Wärmequelle. Die Patentspezifikation GB1571906 wurde angemeldet am 29. Oktober 1976. Die vollständige Spezifikation wurde veröffentlicht am 23. Juli 1980. GB1571906 lehrt Verbesserungen hinsichtlich der Einstellung von Luft/Gas Verhältnissen für Brenner.

Das europäische Patent EP1236957B1 ist erteilt am 2. November 2006 und behandelt die Anpassung eines brennerbetriebenen Heizgerätes an ein Luft-Abgas-System. EP1236957B1 offenbart einen Drucksensor / Luftmassensensor 28, der in der Luftzuführung 14 oder Abgasabführung einer Heizeinrichtung angeordnet ist.

Ein Regler 30 regelt ausgehend von dem Signal des Sensors 28 ein Gebläse 26. Zum Abgleich des momentanen Luftvolumenstroms auf einen erforderlichen Luftvolumenstrom ist eine Betriebskennlinie 40 hinterlegt. Zur Verbesserung des Regelverhaltens bei grossen Temperaturunterschieden und im Hinblick auf Notlaufeigenschaften ist ein Temperatursensor 35 vorgesehen.

Das europäische Patent EP2556303B1 ist erteilt am 24. Februar 2016 und behandelt einen pneumatischen Verbund mit Massenausgleich. EP2556303B1 offenbart eine Venturidüse 5, die Unterdruck erzeugt, mit einem Massenstromsensor 6 in einem Zusatzkanal 7. Eine Steuerung oder Regelung 9 regelt die Drehzahl eines Gebläses 1 in Abhängigkeit vom Signal des Sensors 6.

Das deutsche Patent DE102004055715B4 ist erteilt am 22. März 2007 und behandelt die Einstellung der Luftzahl einer Feuerungseinrichtung. Gemäss DE102004055715B4 wird ein Luft-Massestrom $m_L$ so auf einen erhöhten Wert eingesteuert, dass eine hygienische Verbrennung eintritt.

Eine Patentanmeldung FR2723630A1 wurde am 11. August 1994 angemeldet. Die Veröffentlichung der Anmeldung fand am 16. Februar 1996 statt. FR2723630A1 behandelt ein Verfahren sowie ein Gerät zur automatischen Regelung eines Gasbrenners für einen Heizkessel.

Eine Patentanmeldung DE102010010952A1 wurde am 22. März 2010 angemeldet. Veröffentlicht wurde die Anmeldung am 15. September 2011. DE102010010952A1 lehrt einen pneumatischen Verbund mit Massenausgleich.

Ziel der vorliegenden Erfindung ist die Verbesserung der Strömungsmessung in Verbrennungseinrichtungen, insbesondere in Gegenwart von Turbulenz.

Zusammenfassung

Die vorliegende Erfindung lehrt eine Verbrennungseinrichtung mit einer verbesserten Vorrichtung zur Messung von Strömungen in Verbrennungseinrichtungen in Gegenwart von Turbulenz. Dazu wird in der Verbrennungseinrichtung ein Seitenkanal mit einer Zuführung für ein gasförmiges Fluid verbunden. Der Seitenkanal ist derart mit der Zuführung verbunden, dass ein Fluid von der Zuführung in den Seitenkanal fliessen kann. In den Seitenkanal wird mindestens ein Strömungswiderstandselement eingebracht. Mithin wird der Massenstromsensor im Seitenkanal unempfindlich gegenüber festen Bestandteilen und / oder Tröpfchen im Fluid. Zudem verringert das Strömungswiderstandselement die Turbulenz der Strömung am Massenstromsensor. Zur weiteren Verringerung der Empfindlichkeit gegenüber festen Partikeln, Tröpfchen und / oder Turbulenz wird die Fluidverbindung zwischen Zuführung und Seitenkanal als Staurohr ausgeführt.

Überraschenderweise hat sich bei Versuchen herausgestellt, dass die Stauzone vorteilhaft so auszurichten ist, dass sie stromabwärts ausgerichtet ist. Mit anderen Worten, die Öffnungen der Stausonde zeigen in stromabwärts. Mithin strömt die Strömung an der Stausonde vorbei. Sie wird dadurch rückwärts eingesaugt. Mit dieser Massnahme verbessert sich die Empfindlichkeit gegenüber festen Partikeln, Tröpfchen und / oder Turbulenz deutlich.

Die vorgenannte Vorrichtung erlaubt ferner, den Sicherheitsabstand der Luftzahl λ zu einer unhygienischen Verbrennung geringer zu dimensionieren. Ein solcher Sicherheitsabstand ist aufgrund der natürlichen Schwankungen von Druck und Temperatur über der Zeit nötig. Als Folge des verringerten Sicherheitsabstandes ergibt sich ein insgesamt verbesserter Wirkungsgrad der Verbrennungseinrichtung.

Die genannten Probleme Beherrschung von Turbulenz und Robustheit gegenüber Festpartikeln werden anhand Anspruch 1 angegangen. Besondere Ausführungsformen werden in den abhängigen Ansprüchen behandelt.

Die Öffnung mindestens eines Strömungswiderstandselements kann über einen Aktor verstellbar sein. Vorzugsweise erfolgt die Energieversorgung des Aktors zur Verstellung des Strömungswiderstandselements über ein (achtadriges) Rechner-Netzwerkkabel mit im Kabel integrierter Energieübertragung.

Ein erstes und ein zweites Strömungswiderstandselement können zum Einsatz kommen. Anhand des ersten und des zweiten Strömungswiderstandselements wird ein Druckteiler aufgebaut. Ein Seitenkanal ist in Fluidverbindung mit dem Abschnitt zwischen den beiden Strömungswiderstandselementen. In jenem Seitenkanal ist der Massenstromsensor angeordnet.

Eine Öffnung des Seitenkanals kann mit der Umgebung der Verbrennungseinrichtung in Fluidverbindung stehen, sodass ein Fluidpfad zwischen der Zuführung und der Umgebung (Bereich ausserhalb der Verbrennungseinrichtung) entsteht.

Eine Vorrichtung zur Messung von Strömungen in Verbrennungseinrichtungen kann bereitgestellt werden, worin das Staurohr eine erste und eine zweite Kammer enthält. Die erste Kammer ist in Fluidverbindung mit der Zuführung. Die erste und die zweite Kammer sind untereinander und mit dem Seitenkanal, in Fluidverbindung. Der Seitenkanal verengt an dieser Stelle den Strömungsquerschnitt. Der Massenstromsensor findet sich im Seitenkanal. Vorzugsweise ist auch die zweite Kammer in Fluidverbindung mit der Zuführung.

Der Massenstromsensor kann ein Anemometer und einen Referenztemperatursensor umfassen, wobei das Anemometer mit konstanter Leistung und / oder mit konstanter Spannung und / oder mit konstantem Strom betrieben wird.

Der Massenstromsensor kann ein Anemometer und einen Referenztemperatursensor umfassen, wobei das Anemometer mit konstanter Temperatur betrieben wird.

Das durch Turbulenz erzeugte Rauschen im Signal des Massenstromsensors kann anhand einer (elektronischen, digitalen) Schaltung gefiltert werden. Vorteilhaft wird anhand eines gleitenden Mittelwertfilters und / oder anhand eines Filters mit endlicher Impulsantwort und / oder anhand eines Filter mit unendlicher Impulsantwort und / oder anhand eines Tschebyscheff-Filters gefiltert.

Die Vorrichtung zur Messung von Strömungen in Verbrennungseinrichtungen erfüllt sicherheitstechnische Anforderungen. Vorzugsweise wird dazu der Massenstromsensor (zweifach) redundant ausgeführt. Besonders bevorzugt werden die Ergebnisse der beiden Kanäle untereinander verglichen im Hinblick auf Prüfung der Plausibilität der Signale. Weiterhin ist vorgesehen, die Signale jedes einzelnen Sensors (anhand einer Auswerteschaltung) auf Plausibilität zu prüfen. Idealerweise überprüft sich auch die Auswerteschaltung selbst auf fehlerfreie Funktionsweise. Dazu kann vorzugsweise die Auswerteschaltung (zweifach) redundant mit Ergebnisvergleich ausgeführt werden und / oder Prüfsignale zur Funktionsprüfung der Auswerteschaltung generieren.

Eine Vorrichtung zur Messung von Strömungen in Verbrennungseinrichtungen kann bereit gestellt werden, wobei der Massenstromsensor anhand eines (achtadrigen) Rechner-Netzwerkkabels mit im Kabel integrierter Energieübertragung mit Energie versorgt wird.

Eine Vorrichtung zur Messung von Strömungen mit einer Datenübertragung (und Energieversorgung) kann durch einen zweiadrigen, bidirektionalen Bus, z. B. einem CAN-Bus bereitgestellt werden.

## Kurze Beschreibung der Figuren

Verschiedene Details werden dem Fachmann anhand der folgenden detaillierten Beschreibung zugänglich. Die einzelnen Ausführungsformen sind dabei nicht einschränkend. Die Zeichnungen, welche der Beschreibung beigefügt sind, lassen sich wie folgt beschreiben:

FIG 1 zeigt schematisch ein System mit Verbrennungseinrichtung, worin die Strömung eines Fluids in einer Luftzuführung gemessen wird.

FIG 2 zeigt schematisch und detailliert den Seitenkanal.

FIG 3 zeigt schematisch ein System mit einer Verbrennungseinrichtung und mit einer druckseitig angeordneten Luftklappe.

FIG 4 zeigt schematisch einen Seitenkanal mit Umgehungskanal. Die Stausonde weist Öffnungen auf, welche stromabwärts gerichtet sind.

## Detaillierte Beschreibung

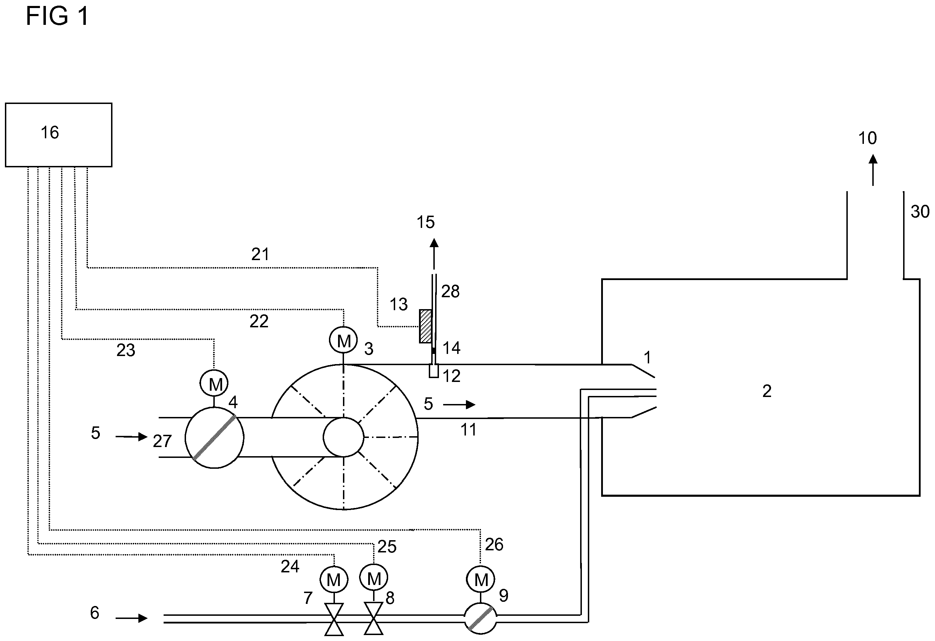

FIG 1 zeigt ein System umfassend einen Brenner 1, einen Wärmeverbraucher 2, ein Gebläse 3 mit einstellbarer Drehzahl und eine motorisch verstellbare Klappe 4. Die motorisch verstellbare Klappe 4 ist nach dem Lufteingang 27 angeordnet. Der Wärmeverbraucher 2 (Wärmetauscher) kann beispielsweise ein Warmwasser-Heizkessel sein. Der Durchfluss (Teilchenstrom und / oder Massenstrom) 5 des Fluids Luft kann gemäss FIG 1 sowohl durch die motorisch verstellbare Klappe 4 als auch durch die Drehzahlvorgabe 22 des Gebläses eingestellt werden.

Er kann bei fehlender Klappe 4 der Luftdurchsatz 5 auch nur durch die Drehzahl des Gebläses 3 einjustiert werden. Zur Einjustierung der Drehzahl des Gebläses 3 kommt beispielsweise Pulsweitenmodulation infrage. Gemäss einer anderen Ausführungsform ist der Motor des Gebläses 3 an einen Umrichter angeschlossen. Die Drehzahl des Gebläses 3 wird mithin über die Frequenz des Umrichters einjustiert.

Gemäss einer anderen Ausführungsform läuft das Gebläse bei einer festen, nicht veränderbaren Drehzahl. Der Luftdurchsatz 5 wird dann durch die Position der Klappe 4 festgelegt. Ausserdem sind weitere Aktoren möglich, welche den Luftdurchsatz 5 verändern. Dabei kann es sich beispielsweise um eine Düsenstockverstellung des Brenners oder eine verstellbare Klappe im Abgaskanal handeln.

Der Durchfluss 6 (beispielsweise Teilchenstrom und / oder Massenstrom) des Fluids Brennstoff wird durch eine Brennstoffklappe 9 eingestellt. Gemäss einer Ausführungsform ist die Brennstoffklappe 9 ein (motorisch verstellbares) Ventil.

Als Brennstoff kommen beispielsweise brennbare Gase wie Erdgas und / oder Propangas und / oder Wasserstoff infrage. Als Brennstoff kommt auch ein flüssiger Brennstoff wie Heizöl infrage. In diesem Fall wird die Klappe 9 durch einen motorisch einstellbaren Öldruckregler im Rücklauf der Öldüse ersetzt. Die Sicherheits-Abschaltfunktion und / oder Schliessfunktion wird durch die redundant vorhandenen Sicherheitsventile 7 - 8 implementiert. Gemäss einer speziellen Ausführungsform sind die Sicherheitsventile 7 - 8 und die Brennstoffklappe 9 als integrierte Einheit realisiert.

Brennstoff wird im und / oder vor dem Brenner 1 dem Luftstrom 5 beigemischt. Das Gemisch wird im Feuerraum des Wärmeverbrauchers 2 verbrannt. Die Wärme wird im Wärmeverbraucher 2 weitertransportiert. Beispielsweise wird erwärmtes Wasser über eine Pumpe an Heizelemente abgeführt und / oder bei Industriefeuerungen ein Gut (direkt) erwärmt. Der Abgasstrom 10 wird über einen Abgasweg 30, beispielsweise einen Schornstein, abgeführt.

Eine Regel- und / oder Steuer- und / oder Überwachungseinrichtung 16 koordiniert alle Aktoren so, dass der richtige Durchsatz 6 an Brennstoff über die Stellung der Klappe 9 zum entsprechenden Luftdurchsatz 5, das heisst dem Durchfluss 5 an Luft (Massenstrom und / oder Teilchenstrom) im Kanal 11 für jeden Punkt der Brennerleistung eingestellt wird. Damit ergibt sich die gewünschte Luftzahl λ. Gemäss einer speziellen Ausführungsform ist die Regel- und / oder Steuer- und / oder Überwachungseinrichtung 16 als Mikrokontroller ausgeführt.

Hierzu stellt die Regel- und / oder Steuer- und / oder Überwachungseinrichtung 16 das Gebläse 3 über das Signal 22 und die Luftklappe 4 über das Signal 23 auf die in der Regel- und / oder Steuer- und / oder Überwachungseinrichtung 16 (in Form einer Kennlinie) hinterlegten Werte ein. Vorzugsweise umfasst die Regel- und / oder Steuer- und / oder Überwachungseinrichtung 16 einen (nicht-flüchtigen) Speicher. In dem Speicher sind jene Werte hinterlegt. Die Stellung der Brennstoffklappe 9 wird über das Signal 26 vorgegeben. Im Betrieb werden die Sicherheits-Absperrventile 7, 8 über die Signale 24, 25 eingestellt.

Sollen Fehler einer Klappe 4, 9 und / oder im Gebläse 3 (beispielsweise in der (elektronischen) Schnittstelle oder Steuereinrichtung der Klappe oder des Gebläses) aufgedeckt werden, so kann dies durch eine sicherheitsgerichtete Rückmeldung der Position der Klappe 4 über die (bidirektionale) Signalleitung 23 für die Klappe 4 und / oder über die (bidirektionale) Signalleitung 26 für die Klappe 9 erfolgen. Eine sicherheitsgerichtete Positionsmeldung kann beispielsweise über redundante Positionsgeber realisiert werden. Falls eine sicherheitsgerichtete Rückmeldung über die Drehzahl erforderlich ist, kann diese über die (bidirektionale) Signalleitung 22 unter Verwendung von (sicherheitsgerichteten) Drehzahlgebern erfolgen. Dazu können beispielsweise redundante Drehzahlgeber verwendet werden und / oder die gemessene Drehzahl mit der Soll-Drehzahl verglichen werden. Die Ansteuer- und Rückmelde-Signale können über unterschiedliche Signalleitungen und / oder über einen bidirektionalen Bus übermittelt werden.

Vor dem Brenner ist ein Seitenkanal 28 angebracht. Durch den Seitenkanal 28 strömt eine kleine Menge an abströmender Luft 15 nach aussen ab. Idealerweise fliesst die Luft 15 dabei in den Raum ab, aus dem das Gebläse 3 die Luft anzieht. Gemäss einer anderen Ausführungsform fliesst die abströmende Luft 15 in den Feuerraum des Wärmeverbrauchers 2 ab. Gemäss einer nicht erfindungsgemäßen Ausführungsform fliesst die Luft zurück in den Luftkanal 11. In diesem Fall ist zwischen Abgriff und Rückführung (zumindest lokal) ein Strömungswiderstandselement im Luftkanal 11 angeordnet. Der Seitenkanal 28 bildet zusammen mit dem Brenner 1 und dem Abgasweg 30 des Wärmeverbrauchers 2 einen Strömungsteiler. Für einen festgelegten Strömungsweg durch Brenner 1 und Abgasweg 30 fliesst jeweils für einen Wert des Luftstromes 5 (umkehrbar eindeutig) ein zugehöriger Wert eines Luftstromes 15 durch den Seitenkanal 28 ab. Der Strömungsweg durch Brenner 1 und Abgasweg 30 muss dabei nur für jeden Punkt der Brennerleistung festgelegt sein. Er kann also über der Brennerleistung (und mithin über dem Luftdurchsatz) variieren.

Im Seitenkanal 28 ist ein Strömungswiderstandselement (in Form einer Blende) 14 angebracht. Mit dem Strömungswiderstandselement 14 wird die Menge an abströmender Luft 15 des Strömungsteilers definiert. Der Fachmann erkennt, dass die Funktion der Blende 14 als definierter Strömungswiderstand auch durch ein Röhrchen definierter Länge (und Durchmesser) realisiert werden kann. Der Fachmann erkennt weiterhin, dass auch anhand eines laminaren Flusselements oder durch einen anderen definierten Strömungswiderstand die Funktion der Blende 14 realisiert werden kann.

Die Durchtrittsfläche des Strömungswiderstandselements 14 kann motorisch verstellbar sein. Zur Vermeidung und / oder Behebung von Verstopfungen durch Schwebeteilchen kann die Durchtrittsfläche des Strömungswiderstandselements 14 verstellt werden.

Insbesondere kann das Strömungswiderstandselement 14 geöffnet und / oder geschlossen werden. Die Durchtrittsfläche des Strömungswiderstandselements wird vorzugsweise mehrfach verstellt, um Verstopfungen zu vermeiden und / oder zu beheben.

Die Strömungsmenge 15 im Seitenkanal 28 hängt von der Durchtrittsfläche des Strömungswiderstandselements 14 ab. Deshalb ist der Wert des Luftstromes 5 über im nicht-flüchtigen Speicher hinterlegte Kennwerte für die Messwerte der Strömung 15 bei jeder verwendeten Durchtrittsfläche von Strömungswiderstand 14 hinterlegt. Damit kann der Luftstrom 5 bestimmt werden.

Mit dieser Anordnung ist der Durchfluss 15 (Teilchenstrom und / oder Massenstrom) durch den Seitenkanal 28 ein Maß für den Luftstrom 5 durch den Brenner. Dabei werden Einflüsse aufgrund von Dichteänderungen der

Luft beispielsweise durch Änderungen des Absolutdrucks und / oder der Lufttemperatur durch den Massenstromsensor 13 kompensiert. Normalerweise ist die Strömung 15 sehr viel kleiner als der Luftstrom 5. Mithin wird der Luftstrom 5 (praktisch) nicht durch den Seitenkanal 28 beeinflusst. Der (Teilchen- und / oder Massen-) Strom 15 durch den Seitenkanal 28 kann mindestens um einen Faktor 100, bevorzugt mindestens um einen Faktor 1000, weiter bevorzugt mindestens um einen Faktor 10000 geringer sein als der (Teilchen- und / oder Massen-) Strom 5 durch den Luftkanal 11.

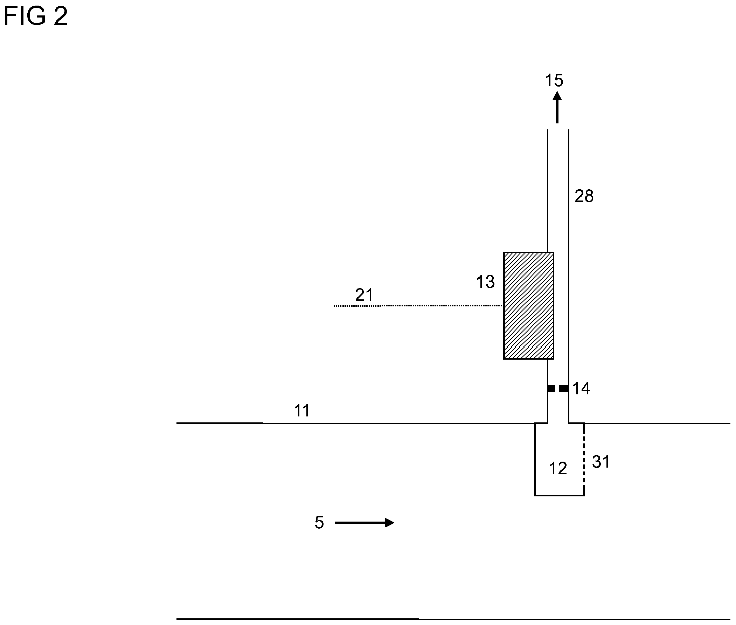

In FIG 2 ist der Ausschnitt im Bereich des Seitenkanals 28 vergrössert dargestellt. Mithilfe eines Massenstromsensors 13 wird der Wert der Strömung 15 im Seitenkanal 28 erfasst. Das Signal des Sensors wird über die Signalleitung 21 an die Regel- und / oder Steuer- und / oder Überwachungseinrichtung 16 übertragen. In der Regel- und / oder Steuer- und / oder Überwachungseinrichtung 16 wird das Signal auf einen Wert der Strömung 15 durch den Seitenkanal 28 und / oder des Luftstromes 5 durch den Luftkanal 11 abgebildet. Gemäss einer weiteren Ausführungsform ist am Ort des Massenstromsensors 13 eine Signalverarbeitungseinrichtung vorhanden. Die Signalverarbeitungseinrichtung verfügt über eine geeignete Schnittstelle, um ein (zu einem Wert des Luftstromes 5 und / oder Strömung 15) verarbeitetes Signal an die Regel- und / oder Steuer- und / oder Überwachungseinrichtung 16 zu übermitteln.

Sensoren wie der Massenstromsensor 13 erlauben die Messung bei grossen Flussgeschwindigkeiten speziell in Verbindung mit Verbrennungseinrichtungen im Betrieb. Typische Werte solcher Flussgeschwindigkeiten liegen den Bereichen zwischen typisch 0.1 m/s und 5 m/s, 10 m/s, 15 m/s, 20 m/s, oder sogar 100 m/s. Massenstromsensoren, welche sich für die vorliegende Offenbarung eignen, sind beispielsweise OMRON® D6F-W oder Typ SENSOR TECHNICS® WBA Sensoren. Der nutzbare Bereich dieser Sensoren beginnt typisch bei Geschwindigkeiten zwischen 0.01 m/s und 0.1 m/s und endet bei einer Geschwindigkeit wie beispielsweise 5 m/s, 10 m/s, 15 m/s, 20 m/s, oder sogar 100 m/s. Mit anderen Worten, es können untere Grenzen wie 0.1 m/s kombiniert werden mit oberen Grenzen wie 5 m/s, 10 m/s, 15 m/s, 20 m/s, oder sogar 100 m/s.

Unabhängig davon, ob die Signalverarbeitung in der Regel- und / oder Steuer- und / oder Überwachungseinrichtung 16 oder am Ort des Massenstromsensors 13 erfolgt, kann die Signalverarbeitungseinrichtung einen Filter enthalten. Der Filter mittelt über Schwankungen des Signals, welche durch Turbulenzen verursacht werden. Der Fachmann wählt hierzu einen geeigneten Filter wie beispielsweise einen gleitenden Mittelwertfilter, einen Filter mit endlicher Impulsantwort, einen Filter mit unendlicher Impulsantwort, einen Tschebyscheff-Filter etc. Gemäss einer speziellen Ausführungsform ist der Filter als (programmierbare) elektronische Schaltung ausgeführt.

Der (elektronische) Filter glättet das Messsignal. Der Filter kann gemäss einer Ausführungsform adaptiv ausgeführt sein. Hierzu wird das Messsignal über eine lange, maximale Integrationszeit (beispielsweise 2 Sekunden bis 5 Sekunden) als Vergleichswert mit einem gleitenden Mittelwertfilter gemittelt. Bei Abweichung eines Messwertes vom Mittelwert und / oder vom Sollwert ausserhalb eines vorgegebenen Bandes wird ein

Sollwertsprung angenommen. Als Ist-Wert wird nun direkt der Messwert verwendet. Mithin reagiert der Regelkreis sofort mit der Abtastrate des Regelkreises.

Die Kombination aus Stausonde 12, Strömungswiderstandselement 14 und Filter ist vorteilhaft. Durch den Filter lassen sich Frequenzteile der Schwankungen des Signals des Massenstromsensors 13 ausgleichen, welche über Stausonde 12 und / oder Strömungswiderstandselement 14 sich kaum ausgleichen lassen. Vorzugsweise integriert die Stausonde 12 Druckschwankungen des Massenstroms 5 im Zufuhrkanal 11 von grösser als 10 Hz, weiter bevorzugt grösser als 50 Hz. Vorzugsweise dämpft das Strömungswiderstandselement 14 Druckschwankungen des Massenstroms 5 im Zufuhrkanal 11 um den Faktor 5, weiter bevorzugt mehr als den Faktor 10 oder sogar mehr als den Faktor 40. Komplementär dazu integriert der Filter Schwankungen im Bereich grösser als 1 Hz, bevorzugt grösser als 10 Hz.

Liegen die Messwerte wieder innerhalb des definierten Bandes, wird die Integrationszeit schrittweise mit (jeder) Abtastung des Regelkreises erhöht. Der so integrierte Wert wird als Ist-Wert verwendet. Dies erfolgt so lange, bis die maximale Integrationszeit erreicht ist. Der Regelkreis wird jetzt als stationär angesehen. Der so gemittelte Wert wird nun als Ist-Wert verwendet. Das offenbarte Verfahren ermöglicht ein exaktes stationäres Messsignal bei maximaler Dynamik.

Gemäss einer weiteren speziellen Ausführungsform sind einzelne oder alle Signalleitungen 21 - 26 als (achtadrige) Rechner-Netzwerkkabel mit (oder ohne) im Kabel integrierter Energieübertragung ausgeführt. Vorteilhaft kommunizieren die an die Signalleitungen 21 - 26 angeschlossenen Einheiten nicht nur über die Signalleitungen 21 - 26, sondern sie werden über geeignete Signalleitungen 21 - 26 auch mit Energie zu deren Betrieb versorgt. Idealerweise können Leistungen bis zu 25.5 Watt durch die Signalleitungen 21 - 26 übertragen werden. Alternativ können die Signale auch über einen zweiadrigen, bidirektionalen Bus, z.B. einen CAN-Bus übertragen werden.

Die in FIG 2 veranschaulichte Form der Messung einer Strömung in einem Seitenkanal 28 ist für Verbrennungseinrichtungen besonders vorteilhaft. Der Luftstrom 5 in dem Luftkanal 11 zwischen Gebläse 3 und Brenner 1 ist (vielfach) turbulent. Die Strömungsschwankungen infolge Turbulenz liegen dabei in der gleichen Grössenordnung wie der gemittelte Wert des Luftstromes 5. Dadurch wird eine direkte Messung des Wertes des Luftstromes 5 erheblich erschwert. Die in dem Seitenkanal 28 auftretenden Strömungsschwankungen fallen deutlich geringer aus als die durch das Gebläse 3 erzeugten Strömungsschwankungen in dem Luftkanal 11. Mithin erhält man mit der in FIG 2 gezeigten Anordnung einen erheblich verbesserten Signal-Rauschabstand des Signals des Massenstromsensors 13. Der Seitenkanal 28 ist bevorzugt so aufgebaut, dass man (praktisch) kein relevantes makroskopisches Strömungsprofil der Strömung 15 erhält. Im Seitenkanal 28 streicht die Strömung 15 auch bevorzugt laminar über den Massenstromsensor 13. Der Fachmann verwendet unter anderem die Reynolds-Zahl $Re_D$ zur Einteilung des Massenstroms 15 eines Fluids im Seitenkanal 28 mit Durchmesser $D$ in laminar oder turbulent. Strömungen mit Reynolds-Zahlen $Re_D$ < 4000, besonders bevorzugt mit $Re_D$ < 2300, weiterhin bevorzugt mit $Re_D$ < 1000 gelten als laminar.

Vorzugsweise ist die Durchtrittsfläche des Strömungswiderstandelements 14 bemessen, ein definiertes, vorzugsweise laminares, Strömungsprofil (eines Massenstromes 15) im Seitenkanal 28 entstehen zu lassen. Ein definiertes Strömungsprofil (des Massenstromes 15 eines Fluids) im Seitenkanal 28 zeichnet sich durch eine definierte Geschwindigkeitsverteilung eines Massenstromes 15 in Abhängigkeit vom Radius des Seitenkanals 28 aus. Der Massenstrom 15 verläuft mithin nicht chaotisch. Ein definiertes Strömungsprofil ist für jede Strömungsmenge 15 im Seitenkanal 28 eindeutig. Mit einem definierten Strömungsprofil ist der lokal am Massenstrom(sensor) gemessene Strömungswert repräsentativ für die Strömungsmenge im Seitenkanal 28. Er ist damit repräsentativ für den Luftstrom 5 im Zufuhrkanal 11. Ein definiertes Strömungsprofil im Seitenkanal 28 (eines Massenstromes 15) ist vorzugsweise nicht turbulent. Insbesondere kann ein definiertes Strömungsprofil (eines Massenstromes 15) im Seitenkanal 28 eine (parabolische) Geschwindigkeitsverteilung in Abhängigkeit vom Radius des Seitenkanals 28 aufweisen.

In der Anordnung gemäss FIG 2 handelt es sich jedoch nicht um eine indirekte Druckmessung. Im Gegensatz zu einer Druckmessung werden Änderungen des Massenstromes infolge einer Temperaturänderung mit erfasst. Die hier offenbarte Vorrichtung vermag mithilfe der Regel- und / oder Steuer- und / oder Überwachungseinrichtung 16 auch Temperaturänderungen zu kompensieren. Der Massenstromsensor 13 ist leicht an praktisch jedes System druckseitig zu montieren.

Um den Einfluss von Turbulenzen noch weiter zu reduzieren, kann die Strömung 15 über eine Stausonde 12 in den Seitenkanal 28 geleitet werden. Die Stausonde 12 ist in dem Luftkanal 11 angeordnet. Die Stausonde 12 ist in Form eines Rohres mit beliebigem Querschnitt (beispielsweise rund, eckig, dreieckig, trapezförmig, vorzugsweise rund) ausgeführt. Das Ende des Rohres 12 in Richtung des Lufthauptstromes 5 ist verschlossen oder stark verengt. Das Ende des Rohres, welches aus dem Rohr mit dem Hauptstrom 5 herausragt, bildet den Beginn des Seitenkanals 28. Jenes Ende mündet in den Seitenkanal 28. Seitlich sind an der Seite der Stausonde 12 in der Richtung, aus welcher der Luftstrom 5 kommt, mehrere Öffnungen (beispielsweise Schlitze oder Bohrungen) 31 angebracht. Durch die Öffnungen 31 kann ein Fluid wie beispielsweise Luft aus dem Luftkanal 11 in die Stausonde 12 eintreten. Mithin ist die Stausonde 12 über die Öffnungen 31 mit dem Luftkanal 11 in (direkter) Fluidverbindung. Die Gesamtfläche der Öffnungen 31 (der durchströmbare Querschnitt der Öffnungen 31) ist deutlich grösser als die Durchtrittsfläche des Strömungswiderstandselements 14. Mithin ist die Durchtrittsfläche des Strömungswiderstandselements 14 (praktisch) bestimmend für den Wert des Luftstromes 15 durch den Seitenkanal 28. Gemäss einer speziellen Ausführungsform ist der gesamte durchströmbare Querschnitt der Öffnungen 31 mindestens um einen Faktor 2, vorzugsweise mindestens um einen Faktor 10, besonders bevorzugt mindestens um einen Faktor 20, grösser als die Durchtrittsfläche des Strömungswiderstandselements 14.

Der Fachmann wählt für die Gesamtfläche der Öffnungen 31 eine gegenüber dem Querschnitt der Stausonde 12 kleine Fläche. Damit wirken sich Schwankungen der turbulenten Hauptströmung 5 (praktisch) nicht aus. Im Rohr der Stausonde baut sich ein beruhigter Staudruck auf. Gemäss einer speziellen Ausführungsform ist der gesamte durchströmbare Querschnitt der Öffnungen 31 mindestens um einen Faktor 2, vorzugsweise mindestens um einen Faktor 5, besonders bevorzugt mindestens um einen Faktor 10, kleiner als der Querschnitt der Stausonde 12.

Ein weiterer Vorteil der Anordnung liegt darin, dass Schwebeteilchen und / oder Tröpfchen mit geringerer Wahrscheinlichkeit in den Seitenkanal 28 gelangen. Durch die wesentlich geringeren Geschwindigkeiten der Luft im Seitenkanal 28 und durch den Staudruck in der Stausonde 12 werden Schwebeteilchen und / oder Tröpfchen im turbulenten Hauptstrom 5 weiter gewirbelt. Grössere feste Partikel können aufgrund des Staudrucks und aufgrund der Öffnungen 31 kaum in die Stausonde 12 gelangen. Sie werden an der Stausonde 12 vorbeigewirbelt. Vorzugweise weisen die einzelnen Öffnungen des Einlasses 31 dazu Durchmesser kleiner 5 mm, weiter bevorzugt kleiner 3 mm, besonders bevorzugt kleiner 1.5 mm auf.

Der Fachmann bringt die Öffnungen 31 derart entlang der Stausonde 12 an, dass sich der Mittelwert des Staudrucks über ein makroskopisches Strömungsprofil des Luftstromes 5 in der Stausonde 12 bildet. Der Fachmann wählt eine Stausonde 12 definierter Länge, um ein makroskopisches Strömungsprofil des Luftstromes 5 im Innern des Rohres zu glätten. Er gleicht über eine an den Luftkanal 11 angepasste Länge der Stausonde 12 die jeweiligen Strömungsverhältnisse für unterschiedlich ausgeführte Luftkanäle 11 an. Solches gilt insbesondere für Luftkanäle mit unterschiedlichen Durchmessern.

Es hat sich überraschenderweise als besonders vorteilhaft herausgestellt, die Öffnungen 31 der Stausonde 12 stromabwärts auszurichten. Die Stausonde 12 unterteilt den Luftkanal 11 in einen ersten und einen zweiten Abschnitt. Der erste Abschnitt des Luftkanals 11 ist von dieser aus stromaufwärts gerichtet. Der zweite Abschnitt des Luftkanals 11 ist von der Stausonde 12 aus stromabwärts gerichtet. Dabei definiert die Richtung des Luftstromes 5 stromaufwärts und stromabwärts. Mit anderen Worten, stromaufwärts ist entgegen der Richtung des Luftstromes 5. Stromabwärts ist in Richtung des Luftstromes 5.

Entgegen einer ersten Vermutung, wonach eine stromabwärts ausgerichtete Stausonde 12 ein Fluid eher in den Kanal 11 ausströmen lässt, erweist sich diese Anordnung als effektiv. Die stromabwärts ausgerichtete Stausonde 12 saugt die Strömung rückwärts ein. Hinzu kommt, dass damit die Gefahr eines Eindringens von Partikeln in die Stausonde 12 bedeutend verringert wird.

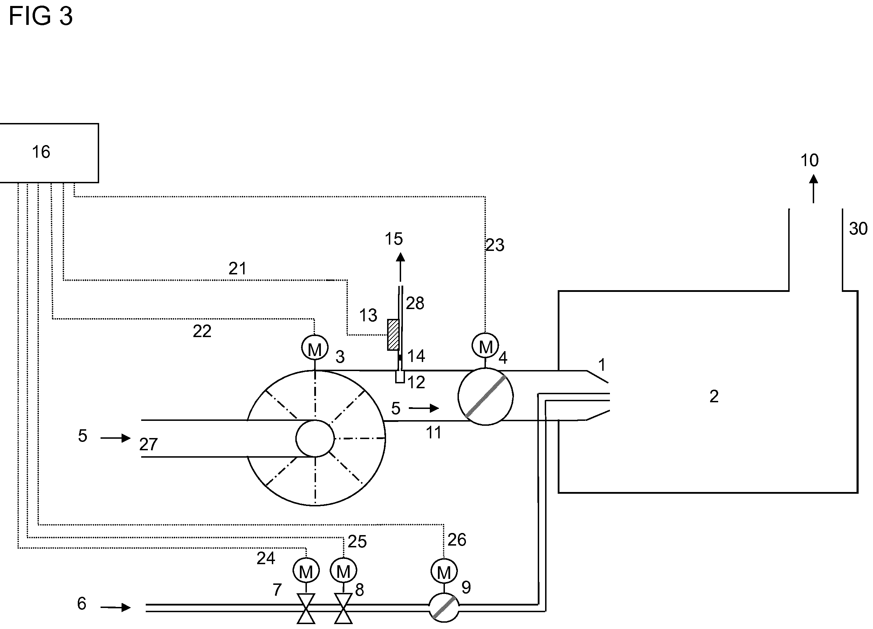

FIG 3 zeigt gegenüber FIG 1 ein System mit einer motorisch verstellbaren Luftklappe 4. Die Luftklappe 4 ist stromabwärts vom Gebläse 3 angeordnet. Die Luftklappe 4 ist auch stromabwärts vom Seitenkanal 28 angeordnet. Das System aus FIG 3 erlaubt die Festlegung einer Position der Luftklappe 4 und / oder der Drehzahl des Gebläses 3 für jeden Punkt der Brennerleistung. Damit ergibt sich (umkehrbar eindeutig) aus jedem Wert vom Luftdurchsatz 5 und der (rückgemeldeten) Stellung der Luftklappe 4 und / oder der (rückgemeldeten) Drehzahl des Gebläses 3 ein Strömungswert 15 im Seitenkanal 28.

Die Messung des Durchflusses 15 im Seitenkanal 28 erfolgt mit einem Massenstromsensor 13. Der Massenstromsensor 13 ist im Zuströmkanal / Abströmkanal 28 angeordnet. Der Massenstromsensor 13 arbeitet vorteilhaft nach dem Anemometer-Prinzip. Dabei erwärmt ein (elektrisch) betriebener Heizer das Fluid. Der Heizwiderstand kann gleichzeitig als Temperatur-Messwiderstand verwendet werden. In einem vor dem Heizwiderstand angeordneten Messelement wird die Referenztemperatur des Fluids gemessen. Das Referenztemperatur-Messelement kann ebenfalls als Widerstand ausgeführt sein, beispielsweise in Form eines PT-1000 Elements.

Idealerweise sind Heizwiderstand und Referenztemperatur-Widerstand auf einem Chip angeordnet. Der Fachmann erkennt, dass dabei die Heizung thermisch ausreichend entkoppelt sein muss vom Referenztemperatur-Messelement.

Das Anemometer kann auf zwei mögliche Arten betrieben werden. Der Heizwiderstand kann mit einer konstanten, bekannten Heizleistung, Heizspannung und / oder Heizstrom beheizt werden. Die Differenztemperatur des Heizers zum Referenztemperatur-Messelement ist ein Mass für den Durchfluss (Teilchenstrom und / oder Massenstrom) im Seitenkanal 28. Es ist damit ebenfalls ein Mass für den Durchfluss 5 (Teilchenstrom und / oder Massenstrom) der Hauptströmung.

Der Heizer kann auch in einem geschlossenen Temperatur-Regelkreis beheizt werden. Es ergibt sich mithin eine konstante Temperatur des Heizers. Die Temperatur des Heizers ist (abgesehen von Schwankungen durch die Regelung) gleich der Temperatur des Sollwerts des Regelkreises. Der Sollwert der Temperatur des Heizers wird festgelegt, indem eine konstante Temperaturdifferenz zur gemessenen Temperatur des Referenztemperatur-Messelements addiert wird. Die konstante Temperaturdifferenz entspricht also der Übertemperatur des Heizers gegenüber dem Referenztemperatur-Messelement. Die in den Heizer eingebrachte Leistung ist ein Mass für den Durchfluss (Teilchenstrom und / oder Massenstrom) im Seitenkanal 28. Es ist damit ebenfalls ein Mass für den Durchfluss 5 (Teilchenstrom und / oder Massenstrom) der Hauptströmung.

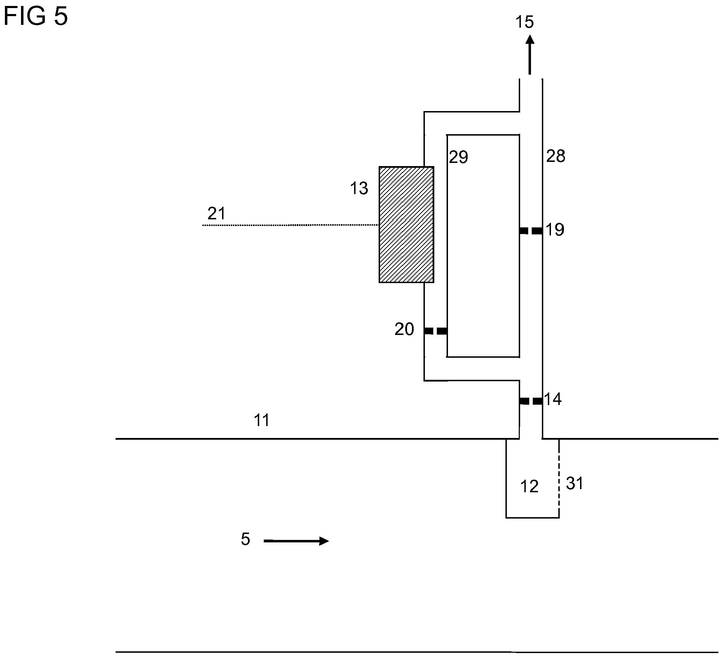

Dem Messbereich des Strömungssensors kann dabei unter Umständen eine geringe Strömung 15 im Seitenkanal 28 entsprechen. Folglich muss bei ausreichend hohem Gebläsedruck die Durchtrittsfläche des Strömungswiderstandselements 14, welche den Durchfluss 15 bestimmt, klein ausgelegt werden. Bei derart kleinen Durchtrittsflächen besteht die Gefahr, dass das Strömungswiderstandselement 14 durch Schwebepartikel verstopft wird. FIG 4 lehrt, wie in solchen Fällen ein Druckteiler mit Umgehungskanal 29 aufgebaut werden kann.

Hinter dem ersten Strömungswiderstandselement 14 mit grösserer Durchtrittsfläche liegt dann ein zweites Strömungswiderstandselement 19. Mithin wird der Druck zwischen den beiden Strömungswiderstandselementen 14 und 19 geteilt. Die Durchtrittsflächen der Strömungswiderstandselemente 14 und 19 bestimmen die Teilung des Drucks. Vor dem Massenstromsensor 13 im Umgehungskanal 29 ist ein weiteres Strömungswiderstandselement 20 angeordnet. Der Fachmann wählt die Durchtrittsfläche des Strömungswiderstandselements 20 ausreichend gross. Der Fachmann wählt ausserdem eine dem Massenstromsensor 13 angepasste Durchtrittsfläche des Strömungswiderstandselements 20. Mit dem so aufgebauten Sub-Strömungsteiler kann dann (umkehrbar eindeutig) auf den Durchfluss 5 (Teilchenstrom und / oder Massenstrom) durch Kanal 11 geschlossen werden.

Für eine fehlersichere Ausführung des Messvorgangs kann der Massenstromsensor 13 (zweifach) redundant mit Ergebnisvergleich realisiert werden. Die doppelte Ausführung betrifft zunächst den Massenstromsensor 13 selbst sowie die Signalverarbeitungseinrichtung. Der Ergebnisvergleich kann dann in einer sicheren Hardware und / oder Software am Ort der Sensoren und / oder in der Regel- und / oder Steuer- und / oder Überwachungseinrichtung 16 durchgeführt werden. Gemäss einer weiteren Ausführungsform wird der Seitenkanal 28 (zweifach) redundant realisiert. Vorzugsweise umfasst jeder redundant vorhandene Seitenkanal 28 ein Strömungswiderstandselement 14. Damit lassen sich Fehler aufgrund verstopfter Strömungswiderstandselemente 14 aufdecken. Die Abzweigung für den zweiten Seitenkanal liegt in diesem Fall vorzugsweise zwischen Strömungswiderstandselement 14 und Stausonde 12. Die Stausonde 12 kann aufgrund der grossen Öffnungen 31 als fehlersicher angenommen werden.

Es können andere Fehler wie Belagbildung auf dem Massenstromsensor 13, Kratzer und / oder andere Beschädigungen, die auf das Messsignal Einfluss haben, erkannt werden. Durch den (zweifach) redundanten Aufbau der Signalverarbeitungseinrichtung können auch Fehler in der Signalverarbeitungseinrichtung erkannt werden. Gemäss einer Ausführungsform werden die Messwerte der redundant vorhandenen Massenstromsensoren 13, vorzugsweise mit jeweils zusätzlicher Mittelwertbildung, durch Subtraktion miteinander verglichen. Die Differenz $\Delta$ liegt dann innerhalb eines Schwellwertbandes

$$-\varepsilon_1 \leq \Delta \leq \varepsilon_2$$

mit den Grenzen $\varepsilon_1$ und $\varepsilon_2$. Mit Hilfe einer Kennlinie der jeweiligen Grenzwerte $\varepsilon_1$ und $\varepsilon_2$ über dem Sollwert des Luftstromes 5 kann die Differenz $\Delta$ für jeden Sollwert des Luftstromes 5 verglichen und bewertet werden.

Teile einer Regeleinrichtung können als Hardware, als Softwaremodul, welches von einer Recheneinheit ausgeführt wird, oder anhand eines Cloud-Rechners, oder anhand einer Kombination der vorgenannten Möglichkeiten realisiert werden. Die Software mag eine Firmware, einen Hardware-Treiber, der innerhalb eines Betriebssystems ausgeführt wird, oder ein Anwendungsprogramm umfassen. Bei Realisierung als Software können die beschriebenen Funktionen gespeichert werden als einer oder mehrere Befehle auf einem Rechner-lesbaren Medium. Einige Beispiele Rechner-lesbarer Medien schliessen Arbeitsspeicher (RAM), magnetischen Arbeitsspeicher (MRAM), ausschliesslich lesbaren Speicher (ROM), Flash-Speicher, elektronisch programmierbares ROM (EPROM), elektronisch programmierbares und löschbares ROM (EEPROM), Register einer Recheneinheit, eine Festplatte, eine auswechselbare Speichereinheit, einen optischen Speicher, oder jegliches geeignete Medium ein, auf welches durch einen Rechner oder durch andere IT-Vorrichtungen und Anwendungen zugegriffen werden kann.

Mit anderen Worten, die vorliegende Erfindung lehrt eine Verbrennungseinrichtung gemäß Anspruch.

In einer bevorzugten Ausführungsform ist der dem mindestens einen Einlass 27 des Zufuhrkanals 11 zugewandte Teilbereich des ersten Abschnitts der Stausonde verschlossen. Mithin kann das Fluid nicht durch den dem mindestens einen Einlass 27 des Zufuhrkanals 11 zugewandten Teilbereich des ersten Abschnitts der Stausonde in die Stausonde einströmen. Mit anderen Worten, der dem mindestens einen Einlass (27) des Zufuhrkanals 11 zugewandte Teilbereich des ersten Abschnitts sperrt für einen Fluss des Fluids aus dem Zufuhrkanal 11 in die Stausonde. Der dem mindestens einen Einlass 27 des Zufuhrkanals 11 zugewandte Teilbereich des ersten Abschnitts der Stausonde hat insbesondere keine Öffnungen und / oder ist verschlossen.

Der Massenstromsensor 13 ragt bevorzugt mindestens 1 mm, mindestens 2 mm, oder mindestens 5 mm in den Seitenkanal 28 hinein. Der erste Abschnitt der Stausonde ragt bevorzugt mindestens 1 mm, mindestens 2 mm oder mindestens 5 mm in den Zufuhrkanal 11 hinein. In einer Ausführungsform stehen der erste und der zweite Abschnitt der Stausonde in direkter Fluidverbindung. Vorzugsweise umfasst der erste Abschnitt der Stausonde genau zwei Teilbereiche.

Eine der vorgenannten Verbrennungseinrichtungen, wobei die Anschlussstelle des Zufuhrkanals 11 eine Stausonde umfasst, wobei der Auslass der Stausonde ausgebildet ist, das Fluid aus der Stausonde in den Seitenkanal 28 ausströmen zu lassen, wobei der mindestens eine Einlass 31 der Stausonde eine Durchtrittsfläche für den Durchtritt des Fluids zwischen Zufuhrkanal 11 und dem ersten Abschnitt der Stausonde aufweist.

Vorteilhaft ist die Durchtrittsfläche des Einlasses 31 der Stausonde grösser als die Durchtrittsfläche des Strömungswiderstandselements 14.

Die vorliegende Erfindung lehrt weiterhin eine der vorgenannten Verbrennungseinrichtungen, wobei der Seitenkanal 28 zusätzlich einen Umgehungskanal 29 aufweist und mindestens ein zweites Strömungswiderstandselement 19 aufweist, wobei das mindestens ei-

ne zweite Strömungswiderstandelement 19 den Seitenkanal in einen dritten dem mindestens einen Strömungswiderstandelement 14 zugewandten und einen vierten dem mindestens einen Strömungswiderstandelement 14 abgewandten Abschnitt unterteilt, undwobei der Umgehungskanal 29 vom dritten Abschnitt des Seitenkanals 28 so abzweigt, dass der Umgehungskanal 29 mit dem dritten Abschnitt in (direkter) Fluidverbindung ist.

Die vorliegende Erfindung lehrt weiterhin eine der vorgenannten Verbrennungseinrichtungen, wobei der Umgehungskanal 29 ein drittes Strömungswiderstandelement 20 aufweist und das dritte Strömungswiderstandelement 20 in dem Umgehungskanal 29 angeordnet ist.

Die vorliegende Erfindung lehrt weiterhin eine der vorgenannten Verbrennungseinrichtungen, die Verbrennungseinrichtung zusätzlich umfassend eine Signalverarbeitungseinrichtung, die einen Tiefpassfilter umfasst, die mit dem Massenstromsensor 13 (kommunikativ) verbunden ist, wobei der Tiefpassfilter ausgebildet ist, das Signal des Massenstromsensors 13 (adaptiv) zu filtern.

Die vorliegende Erfindung lehrt weiterhin eine der vorgenannten Verbrennungseinrichtungen, wobei der Tiefpassfilter adaptiv ausgeführt ist.

Die vorliegende Erfindung lehrt weiterhin eine der vorgenannten Verbrennungseinrichtungen, die Verbrennungseinrichtung umfassend einen zweiten Seitenkanal 28,wobei der zweite Seitenkanal 28 einen Massenstromsensor 13 und einen Einlass (und vorzugsweise mindestens ein weiteres Strömungswiderstandselement) umfasst, wobei der Einlass des zweiten Seitenkanals 28 mit einer Verbindung auswählt ausentweder der Anschlussstelle 12 des Zufuhrkanals 11,oder einer weiteren Anschlussstelle, welche der Zufuhrkanal 11 umfasst, so verbunden ist, dass der zweite Seitenkanal 28 und der Zufuhrkanal 11 in Fluidverbindung stehen,wobei der Massenstromsensor 13 des zweiten Seitenkanals 28 in den zweiten Seitenkanal 28 hineinragt und ausgebildet ist, ein Signal entsprechend einem Massenstrom 15 des Fluids durch den zweiten Seitenkanal 28 zu erfassen (wobei vorzugsweise das weitere Strömungswiderstandselement den zweiten Seitenkanal 28 in einen ersten und einen zweiten Abschnitt unterteilt und eine Durchtrittsfläche für den Durchtritt des Fluids zwischen dem ersten und dem zweiten Abschnitt des zweiten Seitenkanals 28 aufweist, wobei besonders bevorzugt die Durchtrittsfläche des weiteren Strömungswiderstandselements bemessen ist, um im ersten Abschnitt des zweiten Seitenkanals 28 ein definiertes Strömungsprofil des Massenstromes des Fluids entstehen zu lassen).

Die vorliegende Erfindung lehrt weiterhin eine der vorgenannten Verbrennungseinrichtungen umfassend zusätzlich ein Gebläse 3, einen Brenner 1, einen Wärmeverbraucher 2, der mit dem Brenner 1 verbunden ist, und eine Regel- und / oder Steuer- und / oder Überwachungseinrichtung 16, und umfassend eine der vorgenannten Verbrennungseinrichtungen,

wobei die Regel- und / oder Steuer- und / oder Überwachungseinrichtung 16 mit dem (zumindest einen) Massenstromsensor 13 des zumindest einen Seitenkanals 28 der Verbrennungseinrichtung (kommunikativ) verbunden ist.

Das Genannte bezieht sich auf einzelne Ausführungsformen der Erfindung Verschiedene Änderungen an den Ausführungsformen können vorgenommen werden ohne von der zu Grunde liegenden Idee abzuweichen und ohne den Rahmen dieser Erfindung zu verlassen. Der Gegenstand der vorliegenden Erfindung ist definiert über die Ansprüche. Es können verschiedenste Änderungen vorgenommen werden ohne den Schutzbereich der folgenden Ansprüche zu verlassen.

Bezugszeichen

1 Brenner
2 Wärmeverbraucher (Wärmetauscher), insbesondere Brennerraum
3 Gebläse
4 (motorisch verstellbare) Klappe bzw Ventil
5 Fluidfluss (Massenstrom) im Hauptkanal, Luftstrom, Luftdurchsatz
6 Fluidfluss eines brennbaren Fluids, Brennstoffdurchsatz
7, 8 Sicherheitsventil
9 (motorisch verstellbare) Klappe bzw Ventil
10 Abgasfluss, Abgasstrom
11 Zufuhrkanal (Luftkanal)
12 Anschlussstelle
13 Massenstromsensor
14 Strömungswiderstandselement (Blende)
15 Durchfluss (Strömung, Massenstrom) im Seitenkanal
16 Regel- und / oder Steuer- und / oder Überwachungseinrichtung
17 Mischeinrichtung
19, 20 Strömungswiderstandselemente (Blenden)
21 - 26 Signalleitungen
27 Lufteinlass
28 Seitenkanal
29 Umgehungskanal
30 Abgaskanal
31 Öffnungen der Stausonde

**Patentansprüche**

1. Verbrennungseinrichtung umfassend:

   einen Brenner (1),
   einen Seitenkanal (28) und
   einen Zufuhrkanal (11) mit einer Anschlussstelle (12) für den Seitenkanal (28), mit mindestens einem Einlass (27) und einem Auslass, wobei der mindestens eine Einlass (27) des Zufuhrkanals (11) ausgebildet ist, ein Fluid in den Zufuhrkanal (11) einströmen zu lassen, wobei der Auslass des Zufuhrkanals (11) ausgebildet ist, das Fluid aus dem Zufuhrkanal (11) in den Brenner (1) der Verbrennungseinrichtung ausströmen zu lassen;

wobei der Seitenkanal (28) einen Massenstromsensor (13), einen Einlass, einen Auslass und mindestens ein Strömungswiderstandelement (14) umfasst;

wobei der Einlass des Seitenkanals (28) mit der Anschlussstelle (12) des Zufuhrkanals (11) so verbunden ist, dass der Seitenkanal (28) und der Zufuhrkanal (11) in Fluidverbindung stehen; wobei der Massenstromsensor (13) ausgebildet ist, ein Signal entsprechend einem Massenstrom (15) des Fluids durch den Seitenkanal (28) zu erfassen;

wobei das mindestens eine Strömungswiderstandelement (14) den Seitenkanal in einen ersten dem Massenstromsensor (13) zugewandten und einen zweiten dem Massenstromsensor (13) abgewandten Abschnitt unterteilt und eine Durchtrittsfläche für den Durchtritt des Fluids zwischen dem ersten und dem zweiten Abschnitt aufweist;

wobei der Massenstromsensor (13) in den Seitenkanal (28) hineinragt; und

wobei die Anschlussstelle (12) des Zufuhrkanals (11) eine Stausonde umfasst;

wobei die Stausonde einen ersten Abschnitt mit mindestens einem Einlass (31) und einen zweiten Abschnitt mit einem Auslass umfasst, und der erste und der zweite Abschnitt der Stausonde miteinander in Fluidverbindung stehen;

wobei der erste Abschnitt der Stausonde in den Zufuhrkanal (11) hineinragt und der mindestens eine Einlass (31) der Stausonde ausgebildet ist, das Fluid aus dem Zufuhrkanal (11) in die Stausonde einströmen zu lassen;

wobei der erste Abschnitt der Stausonde einen dem mindestens einen Einlass (27) des Zufuhrkanals (11) zugewandten Teilbereich und einen dem Auslass des Zufuhrkanals (11) zugewandten Teilbereich umfasst;

wobei der dem Auslass des Zufuhrkanals (11) zugewandte Teilbereich des ersten Abschnitts der Stausonde den mindestens einen Einlass (31) der Stausonde umfasst.

2. Die Verbrennungseinrichtung gemäss Anspruch 1,

wobei der Auslass der Stausonde ausgebildet ist, das Fluid aus der Stausonde in den Seitenkanal (28) ausströmen zu lassen;
wobei der mindestens eine Einlass (31) der Stausonde eine Durchtrittsfläche für den Durchtritt des Fluids zwischen Zufuhrkanal (11) und dem ersten Abschnitt der Stausonde aufweist.

3. Die Verbrennungseinrichtung gemäss einem der Ansprüche 1 bis 2, wobei der Seitenkanal (28) zusätzlich einen Umgehungskanal (29) aufweist und mindestens ein zweites Strömungswiderstandselement (19) aufweist;

wobei das mindestens eine zweite Strömungswiderstandselement (19) den Seitenkanal in einen dritten dem mindestens einen Strömungswiderstandselement (14) zugewandten und einen vierten dem mindestens einen Strömungswiderstandselement (14) abgewandten Abschnitt unterteilt; und
wobei der Umgehungskanal (29) vom dritten Abschnitt des Seitenkanals (28) so abzweigt, dass der Umgehungskanal (29) mit dem dritten Abschnitt in Fluidverbindung ist.

4. Die Verbrennungseinrichtung gemäss Anspruch 3, wobei der Umgehungskanal (29) ein drittes Strömungswiderstandselement (20) aufweist und das dritte Strömungswiderstandselement (20) in dem Umgehungskanal (29) angeordnet ist.

5. Die Verbrennungseinrichtung gemäss einem der Ansprüche 1 bis 4, wobei der dem mindestens einen Einlass (27) des Zufuhrkanals (11) zugewandte Teilbereich des ersten Abschnitts der Stausonde verschlossen ist, sodass der dem mindestens einen Einlass (27) des Zufuhrkanals (11) zugewandte Teilbereich des ersten Abschnitts für einen Fluss des Fluids aus dem Zufuhrkanal (11) in die Stausonde sperrt.

6. Die Verbrennungseinrichtung gemäss einem der Ansprüche 1 bis 5, die Verbrennungseinrichtung zusätzlich umfassend eine Signalverarbeitungseinrichtung, die einen Tiefpassfilter umfasst, der mit dem Massenstromsensor (13) verbunden ist, wobei der Tiefpassfilter ausgebildet ist, das Signal des Massenstromsensors (13) zu filtern.

7. Die Verbrennungseinrichtung gemäss Anspruch 6, wobei der Tiefpassfilter adaptiv ausgeführt ist.

8. Die Verbrennungseinrichtung gemäss einem der Ansprüche 1 bis 7, die Verbrennungseinrichtung umfassend einen zweiten Seitenkanal (28),

wobei der zweite Seitenkanal (28) einen Massenstromsensor (13) und einen Einlass umfasst,
wobei der Einlass des zweiten Seitenkanals (28) mit einer Verbindung auswählt aus
entweder der Anschlussstelle (12) des Zufuhrkanals (11),
oder einer weiteren Anschlussstelle, welche der Zufuhrkanal (11) umfasst,
so verbunden ist, dass der zweite Seitenkanal (28) und der Zufuhrkanal (11) in Fluidverbindung stehen;
wobei der Massenstromsensor (13) des zweiten Seitenkanals (28) in den zweiten Seitenkanal (28) hineinragt und ausgebildet ist, ein Signal entsprechend einem Massenstrom (15) des Fluids durch den zweiten Seitenkanal (28) zu erfassen.

9. Die Verbrennungseinrichtung nach einem der Ansprüche 1 bis 8 umfassend ein Gebläse (3) und eine Regel- und / oder Steuer- und / oder Überwachungseinrichtung (16),
wobei die Regel- und / oder Steuer- und / oder Überwachungseinrichtung (16) mit dem Massenstromsensor (13) des zumindest einen Seitenkanals (28) der Verbrennungseinrichtung verbunden ist.

**Claims**

1. Combustion device comprising:

    a burner (1),
    a side duct (28), and
    a feed duct (11) with a connection point (12) for the side duct (28), with at least one inlet (27) and one outlet, wherein the at least one inlet (27) of the feed duct (11) is embodied to let a fluid flow into the feed duct (11), wherein the outlet of the feed duct (11) is embodied to let the fluid flow out of the feed duct (11) into the burner (1) of the combustion device,
    wherein the side duct (28) comprises a mass flow sensor (13), an inlet, an outlet and at least one flow resistance element (14),
    wherein the inlet of the side duct (28) is connected to the connection point (12) of the feed duct (11) so that the side duct (28) and the feed duct (11) have a fluid connection to one another,
    wherein the mass flow sensor (13) is embodied to detect a signal according to a mass flow (15) of the fluid through the side duct (28),
    wherein the at least one flow resistance element (14) subdivides the side duct into a first section facing away from the mass flow sensor (13) and a second section facing towards the mass flow sensor (13) and has an admittance surface for the passage of the fluid between the first and the second section,
    wherein the mass flow sensor (13) projects into the side duct (28) and
    wherein the connection point (12) of the feed duct (11) comprises a Pitot probe,

    wherein the Pitot probe comprises a first section with at least one inlet opening (31) and a second section with an outlet, and the first and the second section of the Pitot probe have a fluid connection to one another,
    wherein the first section of the Pitot probe projects into the feed duct (11) and the at least one inlet (31) of the Pitot probe is embodied to let the fluid flow in out of the feed duct (11) into the Pitot probe,
    wherein the first section of the Pitot probe comprises a sub-area facing towards the at least one inlet (27) of the feed duct (11) and a sub-area facing towards that outlet of the feed duct (11),
    wherein the sub-area facing towards that outlet of the feed duct of the first section of the Pitot probe comprises the at least one inlet (31) of the Pitot probe.

2. Combustion device according to claim 1

    wherein the outlet of the Pitot probe is embodied to let the fluid flow out of the Pitot probe into the side duct (28),
    wherein the at least one inlet (31) of the Pitot probe has an admittance surface for the passage of the fluid between feed duct (11) and the first section of the Pitot probe.

3. Combustion device according to one of claims 1 to 2, wherein the side duct (28) additionally has a bypass duct (29) and has at least one second flow resistance element (19),

    wherein the at least one second flow resistance element (19) subdivides the side duct into a third section facing towards the at least one flow resistance element (14) and a fourth section facing away from the at least one flow resistance element (14), and
    wherein the bypass duct (29) branches off from the section of the side duct (28) so that the bypass duct (29) has a fluid connection to the third section.

4. Combustion device according to claim 3, wherein the bypass duct (29) has a third flow resistance element (20) and the third flow resistance element (20) is arranged in the bypass duct (29).

5. Combustion device according to one of claims 1 to 4, wherein the sub-area of the first section of the Pitot probe facing towards that at least one inlet (27) of the feed duct (11) is closed off so that the sub-area of the first section facing towards that at least one inlet (27) of the feed duct (11) blocks for a flow of the fluid from the feed duct (11) into the Pitot probe.

**6.** Combustion device according to one of claims 1 to 5, the combustion device additionally comprising a signalprocessing device, which comprises a lowpass filter, which is connected to the mass flow sensor (13), wherein the lowpass filter is embodied to filter the signal of the mass flow sensor (13).

**7.** Combustion device according to claim 6, wherein the lowpass filter is of an adaptive design.

**8.** Combustion device according to one of claims 1 to 7, the combustion device comprising a second side duct (28),

wherein the second side duct (28) comprises a mass flow sensor (13) and an inlet,
wherein the inlet of the second side duct (28) is connected to a connection selected from either the connection point (12) of the feed duct (11), or a further connection point, which includes the feed duct (11),
so that the second side duct (28) and the feed duct (11) have a fluid connection to one another, wherein the mass flow sensor (13) of the second side duct (28) projects into the second side duct (28) and is embodied to detect a signal according to a mass flow (15) of the fluid through the second side duct (28).

**9.** Combustion device according to one of claims 1 to 8, comprising a fan (3) and a closed-loop and/or open-loop control and/or monitoring device (16), wherein the closed-loop and/or open-loop control and/or monitoring device (16) is connected to the mass flow sensor (13) of the at least one side duct (28) of the combustion device.

**Revendications**

**1.** Dispositif de combustion comprenant :

un brûleur (1),
un canal latéral (28), et
un canal d'amenée (11) avec un point de raccordement (12) pour le canal latéral (28), avec au moins un orifice d'entrée (27) et un orifice de sortie, dans lequel l'au moins un orifice d'entrée (27) du canal d'amenée (11) est configuré pour faire entrer un fluide dans le canal d'amenée (11), dans lequel l'orifice de sortie du canal d'amenée (11) est configuré pour faire sortir le fluide du canal d'amenée (11) dans le brûleur (1) du dispositif de combustion ;
dans lequel le canal latéral (28) comprend un capteur de débit massique (13), un orifice d'entrée, un orifice de sortie et au moins un élément de résistance à l'écoulement (14) ;

dans lequel l'orifice d'entrée du canal latéral (28) est relié avec le point de raccordement (12) du canal d'amenée (11) de sorte que le canal latéral (28) et le canal d'amenée (11) sont en communication fluidique ;
dans lequel le capteur de débit massique (13) est configuré pour acquérir un signal conformément à un débit massique (15) du fluide à travers le canal latéral (28) ;
dans lequel l'au moins un élément de résistance à l'écoulement (14) divise le canal latéral en une première section tournée vers le capteur de débit massique (13) et une deuxième section détournée du capteur de débit massique (13) et présente une surface de passage pour le passage du fluide entre la première et la deuxième section ;
dans lequel le capteur de débit massique (13) fait saillie dans le canal latéral (28) ; et
dans lequel le point de raccordement (12) du canal d'amenée (11) comprend une sonde d'engorgement ;
dans lequel la sonde d'engorgement comprend une première section avec au moins un orifice d'entrée (31) et une deuxième section avec un orifice de sortie, et la première et la deuxième section de la sonde d'engorgement sont en communication fluidique l'une avec l'autre ;
dans lequel la première section de la sonde d'engorgement fait saillie dans le canal d'amenée (11) et l'au moins un orifice d'entrée (31) de la sonde d'engorgement est configuré pour faire entrer le fluide depuis le canal d'amenée (11) dans la sonde d'engorgement ;
dans lequel la première section de la sonde d'engorgement comprend une partie tournée vers l'au moins un orifice d'entrée (27) du canal d'amenée (11) et une partie tournée vers l'orifice de sortie du canal d'amenée (11) ;
dans lequel la partie, tournée vers l'orifice de sortie du canal d'amenée (11), de la première section de la sonde d'engorgement comprend l'au moins un orifice d'entrée (31) de la sonde d'engorgement.

**2.** Dispositif de combustion selon la revendication 1, dans lequel l'orifice de sortie de la sonde d'engorgement est configuré pour faire sortir le fluide de la sonde d'engorgement dans le canal latéral (28) ; dans lequel l'au moins un orifice d'entrée (31) de la sonde d'engorgement présente une surface de passage pour le passage du fluide entre le canal d'amenée (11) et la première section de la sonde d'engorgement.

**3.** Dispositif de combustion selon l'une des revendications 1 à 2, dans lequel le canal latéral (28) présente en outre un canal de contournement (29) et au moins un deuxième élément de résistance à l'écoulement (19) ;

dans lequel l'au moins un deuxième élément de résistance à l'écoulement (19) divise le canal latéral en une troisième section tournée vers l'au moins un élément de résistance à l'écoulement (14) et une quatrième section détournée de l'au moins un élément de résistance à l'écoulement (14) ; et

dans lequel le canal de contournement (29) bifurque de la troisième section du canal latéral (28) de sorte que le canal de contournement (29) est en communication fluidique avec la troisième section.

4. Dispositif de combustion selon la revendication 3, dans lequel le canal de contournement (29) présente un troisième élément de résistance à l'écoulement (20) et le troisième élément de résistance à l'écoulement (20) est disposé dans le canal de contournement (29).

5. Dispositif de combustion selon l'une des revendications 1 à 4, dans lequel la partie, tournée vers l'au moins un orifice d'entrée (27) du canal d'amenée (11), de la première section de la sonde d'engorgement est fermée de sorte que la partie, tournée vers l'au moins un orifice d'entrée (27) du canal d'amenée (11), de la première section bloque un flux du fluide depuis le canal d'amenée (11) dans la sonde d'engorgement.

6. Dispositif de combustion selon l'une des revendications 1 à 5, le dispositif de combustion comprenant en outre un dispositif de traitement de signaux qui comprend un filtre passe-bas qui est relié avec le capteur de débit massique (13), dans lequel le filtre passe-bas est configuré pour filtrer le signal du capteur de débit massique (13).

7. Dispositif de combustion selon la revendication 6, dans lequel le filtre passe-bas est réalisé de manière adaptative.

8. Dispositif de combustion selon l'une des revendications 1 à 7, le dispositif de combustion comprenant un second canal latéral (28),

dans lequel le second canal latéral (28) comprend un capteur de débit massique (13) et un orifice d'entrée, dans lequel l'orifice d'entrée du second canal latéral (28) est relié avec une connexion, sélectionnée parmi soit le point de raccordement (12) du canal d'amenée (11) soit un autre point de raccordement lequel comprend le canal d'amenée (11), de sorte que le second canal latéral (28) et le canal d'amenée (11) sont en communication fluidique ;

dans lequel le capteur de débit massique (13) du second canal latéral (28) fait saillie dans le second canal latéral (28) et est configuré pour acquérir un signal conformément à un débit massique (15) du fluide à travers le second canal latéral (28).

9. Dispositif de combustion selon l'une des revendications 1 à 8 comprenant une soufflante (3) et un dispositif de réglage et/ou de commande et/ou de surveillance (16),

dans lequel le dispositif de réglage et/ou de commande et/ou de surveillance (16) est relié avec le capteur de débit massique (13) de l'au moins un canal latéral (28) du dispositif de combustion.

FIG 1

EP 3 301 364 B1

FIG 2

FIG 3

EP 3 301 364 B1

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4337703 C1
- DE 3703934 A1
- GB 1571906 A
- EP 1236957 B1
- EP 2556303 B1
- DE 102004055715 B4
- FR 2723630 A1
- DE 102010010952 A1